# NEW EUROPEAN PATENT SPECIFICATION

(11) **EP 0 454 309 B2**
(45) Date of publication and mention of the opposition decision: **16.04.2003**
(45) Mention of the grant of the patent: 28.07.1999
(21) Application number: 91302947.6
(22) Date of filing: 04.04.1991
(51) Int. Cl.: B32B 1/08, F16L 55/165

(54) **Material and process for lining pipes**
Material und Verfahren zum Beschichten von Rohren
Matériau et procédé pour le revêtement de tuyaux

(30) Priority: 10.04.1990 JP 9588090
(43) Date of publication of application: 30.10.1991
(73) Proprietor: ASHIMORI INDUSTRY CO., LTD., Osaka-shi, Osaka-fu (JP); ASHIMORI ENGINEERING CO., LTD, Tokyo-to, 113 Japan (JP)
(72) Inventor: Imoto, Takayoshi, Otsu-shi, Shiga-ken (JP); Seshimo, Masahiro, Nishinomiya-shi, Hyogo-ken (JP); Makimoto, Futoshi, Otsu-shi, Shiga-ken (JP); Kitagawa, Eiji, Fushimi-ku, Kyoto-shi, Kyoto-fu (JP)
(74) Representative: Harrison, David Christopher

(56) References cited:
- EP-A- 0 351 570
- EP-B- 0 000 576
- AU-B- 2 874 584
- DE-A- 2 629 214
- DE-A- 3 801 468
- GB-A- 1 423 819
- JP-A- 51 040 595
- US-A- 4 723 579
- US-A- 4 836 715
- WORLD PATENTS INDEX LATEST Week 9050, Derwent Publications Ltd., London, GB; AN 90-371170

## Description

The present invention relates to a lining material for pipes, especially those pipes such as sewage pipes which are buried, and which is capable of forming as a lining a strong inner pipe made of fabric-fibre-reinforced plastic. It also relates to a process for providing the pipe lines with such fabric-fibre-reinforced plastic lining. More particularly, the present invention relates to a lining material for pipes already constructed and buried in the ground, such as gas pipes, potable water pipes and sewage pipes, for the purpose of their repair or reinforcement which comprises a plastic tubular film overlaid with a specific fabric-fibre mat impregnated with a hardenable resin and an outer film, and to a process for providing the pipe lines with such fabric-fibre-reinforced plastic lining, which comprises inserting the lining material into the pipe lines, applying the lining material onto the inner surface of the pipe lines under internal pressure exerted by a pressurized fluid introduced into the pipe line and curing the resin by heating.

Various lining materials are known for repair or reinforcement of pipe lines. In particular, a lining material comprised of a mat of fibrous material impregnated with a hardenable resin is known, for example, in Japanese Patent Publication Nos. Sho. 51-40595 and 58-9317. The lining material disclosed in Japanese Patent Publication No. Sho. 51-40595 (referred to hereinafter as Ref. 1) comprises, as shown in Figs. 1-5 and 8, a mat or tubular mat of a strong fibrous material such as glass fibers impregnated with a liquid thermohardenable resin sandwiched between an inner tubular plastic film and an outer plastic film. The lining material is introduced into a pipe after peeling off the outer plastic film and is inflated so as to be brought into intimate contact with the inner surface of the pipe and the thermohardenable resin is cured to form a fiber-reinforced plastic (FRP) lining on the inner surface of the pipe. The inner tubular plastic film may be removed by peeling after completion of the FRP lining (Col. 12, lines 2-4, Ref. 1).

A mat or tubular mat of a strong fibrous material impregnated with a liquid thermohardenable resin, which is usually interposed between inner and outer plastic films and is heated under a given condition to thicken the liquid resin, is called a Sheet Moulding Compound ("SMC"). In this case, two plastic films on the faces of the resin-impregnated mat serve to prevent evaporation of the hardenable resin ingredient, for example, monomeric styrene in the mat.

In the lining material disclosed in Ref. 1, a mat of glass fibres is firstly spread on a plastic film and is impregnated with a hardenable resin to form a curable FRP, i.e. FRP not yet cured which is then overlaid with a tubular film as shown in Fig. 2. The ends of the curable FRP are folded on the tubular film so that it is wrapped with the curable FRP with the lateral end portions of the curable FRP overlapped (Fig. 4). The curable FRP in the form of a tube is then wrapped with the outer plastic film (the material of which is selected so that it may be easily removed e.g. by peeling) and the composite tube thus obtained is finally heated to thicken the curable FRP whereby a tubular object is obtained (Fig. 5).

However, the lining material of Ref. 1 has the drawback that when it is inserted into a pipe, a strong force is exerted on the SMC due to frictional resistance against the inner surface of the pipe and so the SMC is locally stretched to reduce its thickness or in extreme cases is broken down. In particular, SMC in not-yet-cured state has poor tensile strength and easily undergoes deformation.

It is also a drawback of SMC that it has no stretchability. On application of the lining material, it is usually so adjusted that its outer circumferential length is approximately identical with the inner circumferential length of the pipe to be treated. When the lining material inserted into the pipe is inflated to bring the lining material evenly into intimate contact with the inner surface of the pipe, however, not all parts of the outer surface of the lining material are always in contact with the correct position of the inner surface of the pipe, even if the lining material is uniformly inflated. The part of the lining material initially contacted with the inner surface of the pipe is, due to frictional resistance, not slidable to the correct position so that the lining material may form wrinkles due to distortion and occurrence of locally loose portions. On the other hand, the portion of the lining material not finally attached to the inner surface of the pipe line is considerably elongated so that the weak portion of the lining material tends to be broken down, because SMC has no stretchability.

The lining material disclosed in Japanese Patent Publication No. Sho. 58-9317 (referred to hereinafter as Ref. 2) comprises SMC interposed, in a sandwich structure, between an outer tubular film and a specific inner tubular film having an outer layer capable of being easily split off from SMC and an inner layer which is highly moisture-proof. Ref. 2 discloses as a specific example of the inner tubular film one having an outer layer of polyamide, polyester or a fluorine resin and an inner layer of polyvinyl chloride, polyester, polyolefin or a fluorine resin, one having an outer layer of polyamide and an inner layer of polyolefin (Col. 2-3, Ref. 2) and particularly one having an outer layer of nylon 6 film and an inner layer of a laminated film of Nylon 6 and polyethylene (Table 4).

What is taught by Ref. 1 and Ref. 2 is that SMC is suitable as a material for lining pipe lines and is converted at the final stage to FRP although there are some differences between them in the structure of the inner plastic film. Accordingly, the nature and structure of SMC of these Refs. 1 and 2 once applied to the inner surface of pipes are the same. It is also common to these documents that the lining material is applied onto the inner surface of a pipe after peeling off the outer layer, and inflated so as to be brought into contact evenly with the inner surface of the pipe, and then the SMC is cured by heating with steam or a hot blast. The inner tubular film is then peeled off from the resultant FRP as shown in Fig. 10 of Ref. 2. If the inner surface of the pipe line is wetted by underground water entering through any worn-out or damaged portion, SMC will not be completely cured in the presence of such water. As the original purpose of applying the lining material to pipes lies in repairing or reinforcing such damaged or worn-out portions of the pipe lines, this would not achieve the inherent purpose of pipe-lining. On the other hand, SMC can be prevented from contact with water by fitting the pipe lining without peeling off the outer plastic film covering the SMC. In this case, contact of SMC with water can certainly be prevented but solvents remain unevaporated in the SMC, which impedes or prevents the formation of a strong lining material.

When SMC is moulded by pressing, such moulding is generally conducted at a temperature of 130-150°C under pressure of 30-80 kg/cm² whereby the glass fibres can completely be impregnated with the resin and any optional filler. In Ref. 1 or 2, however, the lining material is internally pressed against the inner surface of the pipe line by pressurized fluid such as hot blast or steam acting also as heat source. Accordingly, the curing of SMC in this case is conducted under mild conditions involving temperatures of around 60-80°C and pressures of the order of 1 kg/cm². Thus, the glass fibres may not be sufficiently impregnated with the resin and any optional filler and the cured resin tends to form interstices through which water oozes if the water pressure is high.

If a laminated film of a polyamide and polyethylene is used as inner layer in the lining material of Ref. 2, the polyethylene may be melted when heated steam is introduced. In this case, there is a danger that the steam can penetrate the polyamide film and disturb the curing of the SMC. Accordingly, polypropylene film possessing a higher heat-resistance may be used in place of polyethylene film, but polypropylene exhibits high rates of contraction on heating and high tensile elasticity with low tear resistance, with the result that the polypropylene film is shrunk by the heat of the steam; it is also easily torn, which permits permeation of steam to disturb the curing of unsaturated polyester resin. If Nylon 6 is used as the inner layer of the tubular film, this, having a relatively low melting point, may be partially melted when the temperature is raised to about 200°C for several minutes by the exothermic curing of unsaturated polyester resin in the SMC. The Nylon 6 can no longer be peeled off and the inner surface of the resultant FRP is uneven.

In GB-A-2113608 a mat of fibrous material is reinforced by sandwiching within the thickness of the mat one or more layers of reinforcements such as a mesh, cloth or netting. There may be a conventional impermeable inner layer. Fitting of the material as a lining is achieved by applying adhesive to its outer face and/or to the inner surface of the tube to be lined, placing the material in the tube and inserting a separate inflatable bag or the like to urge the lining into contact with the tube as the adhesive hardens. A longitudinal overlap is provided so that the material may adjust itself to tubes of a range of inner peripheral sizes.

In this disclosure no attention is paid to various problems of the handleability of the lining. In particular, the use of adhesive is not satisfactory, and there is no realisation of the possibility or even probability of damage of a mat as it is being dragged into position along the tube.

Thus, the prior art lining materials have, as having been discussed heretofore, a number of disadvantages to be overcome. In the above circumstances, there is a great demand for developing a new type lining material for pipe lines in place of the conventional lining materials, especially of the SMC type.

It has now been found surprisingly that a new lining material can be obtained by impregnating a sheet comprised of a glass cloth fabric and a mat of chopped strand glass fibres with a liquid thermohardenable resin and thickening the resin e.g. by part-curing to form a fabric-fibre-reinforced composite moulding sheet, the glass cloth forming an outer layer for contacting the pipe to be lined. This specific fabric-fibre-reinforced composite moulding sheet can be easily handled and inserted into pipe lines before being cured by heating.

In accordance with the present invention, there is provided a lining material for pipe lines which comprises a flexible tubular film, a composite mouldable sheet covering the outer surface of the tubular film and a removable film covering the outer surface of the sheet, the sheet being comprised of a glass cloth fabric and a mat of chopped strand glass fibres of high tenacity impregnated with a thickened liquid thermohardenable resin to form a fabric-fibre-reinforced composite moulding sheet with the fibres dispersed therein, the glass cloth layer of which is outermost in use and the edges of the sheet slidably overlapping each other.

It is preferable in the lining material that the flexible tubular film at the innermost portion can be expansively inflated by inner pressure exerted by a pressurized fluid.

The fabric may have a water-repellent finish. The inner tubular film may have an outer layer comprising a film of a biaxially oriented plastic material, an intermediate layer comprising a film of a biaxially oriented plastic material and possessing flexibility, toughness and high tensile stress at a low degree of elongation and an inner layer possessing poor steam-permeability and a resistance to heat such that its plastic material is not melted or deteriorated by steam.

An intermediate film may be interposed between the outer layer of the sheet and the inner tubular film, which is capable of being liquefied with a solvent contained in the thermohardenable resin, or by heating, and of being integrally bound with the sheet after curing of the thermohardenable resin.

The fabric layer, or a further fabric layer, may be extended beyond the edges of the sheet and secured together in the region of the overlap. In this way, the risk of escape or bursting of the material if voids or breaks in the pipe coincide with the position of the overlap may be reduced.

In accordance with another aspect of the present invention, there is provided a process for providing a pipe with a plastic lining which comprises peeling off the outer film of a lining material as previously defined, inserting the lining material into the pipe with the fabric contacting the pipe, dosing both ends of the lining material, inflating the lining material by introducing a pressurized fluid whereby overlapped portions of the material slide so as to come into even contact with the inner surface of the pipe, thereafter heating the lining material to cure the thickened thermohardenable resin in the sheet to form an integrally combined plastic lining on the inner surface of the pipe line. The introduction of the pressurized fluid may be in two stages; a first introduction to inflate the lining material and a second, light pressure, stage to cause any sliding of the overlapped parts of the sheet

After completion of the pipe-lining, the inner film or films may be removed by drawing a turning belt previously attached to one terminal end of the lining material in the direction of the other terminal end while everting the inner film or films.

A fabric-fibre-reinforced composite moulding sheet (referred to hereinafter simply as "FCM-sheet") may form the predominant constituent of the lining material. This FCM-sheet is fundamentally different in structure and technical effect from the conventional SMC as will be explained in detail hereinafter. In addition, reinforcement of pipe lines according to this invention is different from the type as described, for example, in US Patents 4,600,615, 4,686,126 etc. wherein a resin in the lining material has been fully cured prior to the pipe-lining treatment.

The FCM-sheet may also have at its surface which is innermost in the finished lining, a non-woven fabric layer including comparatively soft and flexible fibres. This offers improved abrasive-resistance over liners wherein brittle hard fibres are exposed to fluids in the pipe.

In the FCM-sheet, it is preferable that the liquid thermohardenable resin comprises an unsaturated polyester resin or an epoxy acrylate resin each having a maximum exothermic temperature according to JIS K-6901 of at least 200°C. It is also preferable that such liquid thermohardenable resin contains styrene-butadiene-styrene block copolymer, polystyrene, polyethylene, methyl polymethacrylate, polyvinyl acetate, saturated polyester, urethane-modified saturated polyester and/or polycaprolactone as a low shrinkage additive, barium sulfate, talc, aluminium hydroxide and/or glass powder as a filler, magnesium oxide and/or magnesium hydroxide as a thickening agent, and an organic peroxide having a decomposition temperature of 60-90°C for rendering the half-life for 10 hours as a curing catalyst.

Furthermore it should be in thickened or part-cured form (by e.g. aging, partial heating or other suitable procedure according to the precise nature of the resin) in the finished lining material before it is used.

The present invention can more fully be understood from the following description taken in conjunction with the accompanying drawings in which:

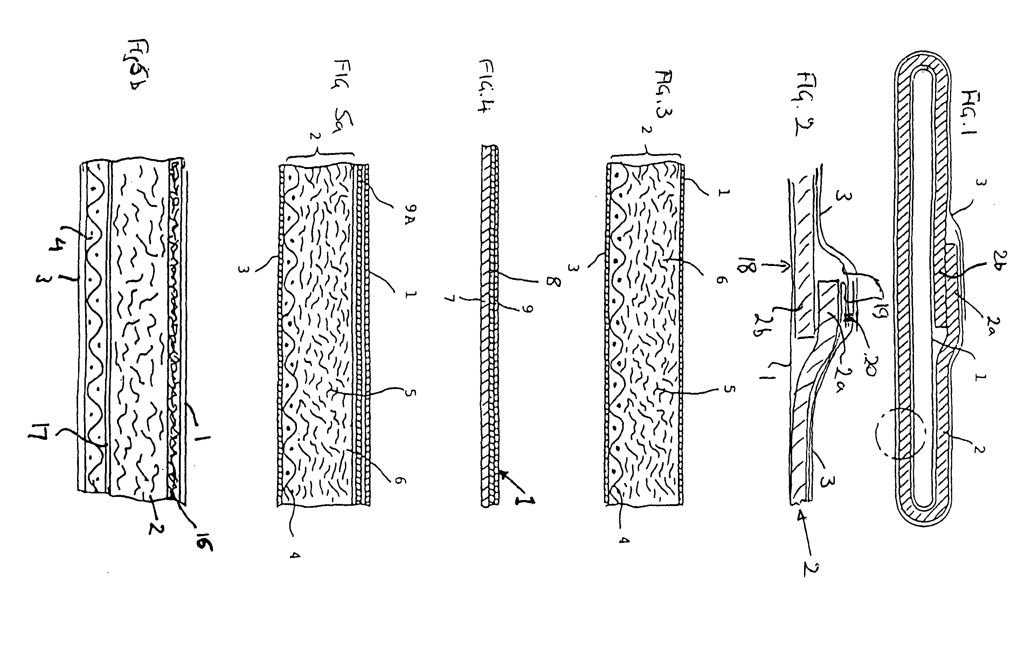

Fig. 1 is a cross sectional view of the lining material of this invention in flattened state,
Fig. 2 is a detail of a modification,
Fig. 3 is a partially enlarged view of the cross section of the lining material encircled in Fig. 1,
Fig. 4 is a cross section of an example of the inner tubular film having three layers,
Figs. 5a and 5b are partially enlarged views of the cross section of other examples of the lining material,
Fig. 6 is a plan view showing an end of the lining material bound to a drawing belt for inserting the lining material into a pipe line,

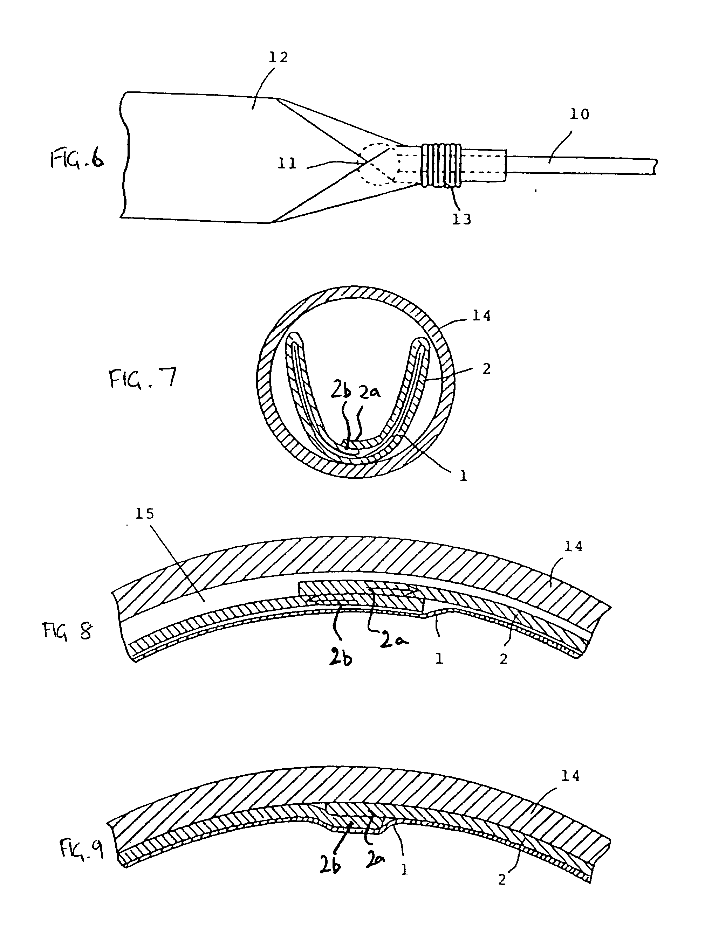

Fig. 7 is a cross sectional view showing the state of the lining material inserted into a pipe line,
Fig. 8 is a partial cross sectional view showing the state of the lining material merely internally inflated, and
Fig. 9 is a partial cross sectional view showing the state of the lining material brought into tight contact with the inner surface of a pipe line.

In Fig. 1 showing an example of the lining material in flattened state, a flexible tubular film 1 is overlaid with an FCM-sheet 2. This film 1 is air-tight and elastic and is capable of being expansively inflated by inner pressure. The sheet 2 is somewhat longer in width than the relaxed circumference of the film 1. Accordingly, when the sheet 2 lies along the outer circumference of the film 1 its the lateral end portions are slidably overlapped in a lap extending longitudinally along the tube. The sheet 2 is overlaid with a plastic film 3 which is easily capable of being removed from the sheet 2 e.g. by splitting or peeling. This film 3 is fluid-impervious so that it can inhibit evaporation of a solvent contained in the sheet 2. The film 3 is overlapped, as is the sheet 2, at its lateral end portions to prevent the sheet 2 from being exposed to the air.

In Fig. 3 showing an enlarged cross section of the FCM-sheet 2 interposed between the films 1 and 3, a fabric 4 and a mat 5 of highly strong fibres are impregnated with a liquid thermohardenable resin 6. A woven fabric made of glass fibre is used as the fabric 4.

Chopped strand glass fibres are the highly strong fibres used for the mat 5. The fabric is in a position near the outer surface of the sheet 2 because in that position it prevents abrasion of the resin between the sheet 2 and the inner surface of a pipe as the lining material is pulled through the pipe.

In this case, the fabric 4 in such position has preferably a water-repellent finish and this water-repellency is imparted to the fabric by covering the fibers constituting the fabric with a hydrophobic substance or introducing hydrophobic groups into the molecules constituting the above fibres. The treatment for imparting water-repellency to the fibers may be carried out by the use of one or more of water-repellents of the fluorine or silicone series. Water-repellents of the fluorine series are organic high molecular compounds having high molecular weight polyacrylic esters or the like as main chain and fluorocarbon side chains. In order to apply these water-repellents to the fibres, they are dispersed in water to form an emulsion and the fibres are then dipped into the emulsion. Specifically, copolymers containing esters of perfluoralkanoic acids as predominant component are preferable as the water-repellents of fluorine series. On the other hand, the water-repellents of silicone series have amain chain wherein silicon atoms and oxygen atoms are arranged alternately and can directly bind to the molecules of fibres constituting the fabric to form an extremely thin strong water-repellent film on the surface of the fibres. Specifically, methyl hydrogen siloxane is preferable as the water-repellent of the silicone series. A melamine resin or imine resin can jointly be used for improving durability.

A problem which may be encountered when the liner material has a longitudinal overlap is that if that overlap coincides with the position of a void or hole in the pipe to be lined, the liner may "blow out" into that void, with bursting of the inner tubular layer 1 in the region 18. To counteract this there may be provided, as shown in Figure 2, an extension 19 of fabric beyond the edges of the sheet 2. This extension 19 is preferably provided by the fabric 4 itself but it may be a separate fabric layer. The extensions are of such a length that they may be sewed or otherwise secured together in a longitudinal seam 20 which can be laid back over the overlapping portion 2a.

The sleeve so formed provides support for the sheet 2 in the event that there is a void or gap in the pipe at that position.

The thermohardenable resin may be an unsaturated polyester resin or epoxy acrylate resin commonly used for SMC. These resins have preferably a maximum exothermic temperature of 200°C, preferably 220°C or higher according to the high temperature curing characteristics of JIS K-6901. As the unsaturated polyester resin is used any of the unsaturated polyesters of ortho, iso and bis types having the above characteristics. A urethane-modified or acrylic-modified resin can also be used as the polyester resin. As the epoxy acrylate resin is used any of the epoxy acrylate resins of bis-phenol or novolac type having the above characteristics.

The above FCM-sheet 2 can optionally contain various auxiliary substances such as a low shrinkage additive, a filler, thickening agent and/or a curing catalyst. Illustrative of the low shrinkage additive are, for example, a thermoplastic rubber such as styrene-butadiene-styrene block copolymer, and a thermoplastic polymer such as polystyrene, polyethylene, methyl polymethacrylate, polyvinyl acetate, a saturated polyester, an urethane-modified saturated polyester and/or polycaprolactone. The proportion of the low shrinkage additive to the thermohardenable resin is desirably as follows: the thermohardenable resin/the low shrinkage additive = 50-90/50-10. Illustrative of the filler are, for example, inorganic substances having chemicals-resistance, especially acid-resistance such as barium sulfate, talc, alumina, aluminium hydroxide and/or glass powder. The filler is used in an amount of 15-200 parts by weight based on 100 parts by weight the total amount of the thermohardenable resin and the low shrinkage additive. Illustrative of the thickening agent are, for example, magnesium oxide and/or magnesium hydroxide. The thickening agent is desirably used in an amount of 0.5-5.0 parts by weight based on 100 parts by weight of the total amount of the thermohardenable resin and the low shrinkage additive. As the curing catalyst is used an organic peroxide having a decomposition temperature of 60-90°C, preferably about 70°C for obtaining a half-life of 10 hours. Illustrative of the curing catalyst are, for example, cumyl peroxyneodecanoate, tert-butyl peroxyoctoate, tert-butyl peroxyisobutyrate, 1,1-bis(tert-butyl peroxy)3,3,5-trimethylcyclohexane, benzoyl peroxide and succinic peracid. An organic peroxide having a decomposition temperature higher than 90°C for obtained the half-life of 10 hours is slow in reaction velocity so that the curing time becomes longer. On the other hand, an organic peroxide having a decomposition temperature lower than 60°C causes premature gelation of the resin so that the operation for impregnating the fabric 4 and the mat 5 with the resin 6 becomes extremely difficult. The curing catalyst is desirably used in an amount of 0.5-4.0 parts by weight based on 100 parts by weight of the total amount of the thermohardenable resin and the low shrinkage additive.

In addition to the above auxiliary substances, a colorant such as dye or pigment and other additive such as a stabilizer, etc. may be incorporated into the resin 6.

Finally, the mat is used desirably in an amount of 15-150 parts by weight based on 100 parts by weight of the total amount of the thermohardenable resin and the low shrinkage additive.

Specifically, the inner tubular film 1 is desirably made of a polyester which is a synthetic resin having heat-resistant and strong and is moderately expandible or stretchable by inner pressure. The tubular film 1 has preferably at least two-layer structure wherein the inner surface is a layer of polyolefin, preferably polypropylene having poor water vapour permeability and the outer surface is a layer of polyester. Most preferable as the tubular film 1 is a three-layered film as will be described in detail herein after. Specifically, the outer plastic film 3 is desirably made of a polyester like that of the tubular film 1.

The FCM-sheet 2 can be manufactured firstly by mixing the thermohardenable resin 6 with one or more of the optional ingredients such as low shrinkage additives, fillers, thickening agents curing catalysts and/or colorants to form a composite substance and then impregnating a combination of the fabric 4 and the mat 5 of highly strong fibres. The plastic film 3 is overlaid with a glass cloth fabric 4 and the liquid thermohardenable resin 6 in a given amount is applied onto the surface of the fabric 4. The fibres such as glass fibres are then dispersed on the surface of the resin 6 by cutting them with a cutter, thereby forming a mat 5 on the surface of the resin 6. On the other hand, the thermohardenable resin 6 is applied onto a separate plastic film and the resin-coated film is placed on the mat 5 in such manner that the surface of the film on which the resin 6 has been coated comes into contact with the mat. The assembly of fabric 4, mat 5 and resin 6 interposed between the film 3 and another plastic film is pressed externally to impregnate a combination of the fabric 4 and the mat 5 sufficiently with the resin 6. An alternative method is to calendar a composition of fibres and resin between rollers to a desired thickness, spreading the layer on a sheet 3 and the fabric 4 as before.

The sheet thus obtained is then heated at a predetermined temperature, e.g. at 40°C to partially cure the resin 6 thereby thickening it somewhat. Additionally or alternatively it may be aged for this purpose. The viscosity of the resin 6 after thickening is preferably 10000-100000 poise as composite substance. If the viscosity is too low, it will become difficult to peel off the plastic film, thus making workability inferior. On the other hand, if the viscosity is excessively high, the resultant lining material will have lower adhesion to the inner surface of a pipe detracting from the quality of the lining. The thickened FCM-sheet 2 thus obtained is cooled and stored at a temperature lower then 20°C whereby the thickening effect is checked and the FCM-sheet 2 can be stored for a long period of time.

The lining material of this invention wherein the FCM-sheet 2 is interposed, for example, between the films 1 and 3 can be manufactured from FCM-sheet in the following manner: The FCM-sheet 2 of a thickness of e.g. 3 to 20 mm is placed on a board in such manner that the film 3 lies on the board, and the temporary plastic film on the other face is peeled off. The tubular film 1 is then placed on the exposed sheet 2 at the central part thereof, and both edges of the sheet 2 are laid over on the tubular film 1 in such manner that the lateral edge portions are slidably overlapped with each other, and the film 1 is entirely covered by the sheet 2. The sheet 2 as a whole in the form of a tube, though its edge portions are overlapped each other, is then overlaid with the plastic film 3 both edges of which are overlapped each other as in the case of the sheet 2, thereby forming the lining material having the cross section as shown in Fig. 1. If extensions 19 are provided they are sewed or otherwise secured together before the edges of the film 3 are overlaid over each other.

Fig. 4 shows the cross section of an inner tubular film 1 having three layers, the film comprises an outer layer 7 (i.e. outermost of the tube, nearer to the sheet 2), an intermediate layer 8 and an inner layer 9. The outer layer 7 comprises a biaxially oriented film of a plastic which is easily peeled off from the FCM-sheet 2 and has high tensile strength and heat-resistance. Specifically, polyethylene terephthalate or Nylon 66 is suited for the plastic constituting the outer layer. Such plastic has a melting point above 250°C and so is not harmed even by the heat evolved during the curing reaction of the thermohardenable resin. Thus, the inner tubular film 1 can be peeled off from the inner surface of the FCM-sheet 2 after it is cured. As the tensile strength of the outer layer 7 is excellent, it withstands the tensile force for peeling off the tubular film 1 from the sheet 2 after its curing.

The intermediate layer 8 comprises a biaxially oriented film of a plastic which possesses flexibility, toughness and high tensile stress at a low degree of elongation. Nylon 6 is suitable as this plastic. Polyethylene terphthalate or Nylon 66 has high strength but is inferior in flexibility and toughness. When the lining material is folded flat, the inner tubular film 1 is especially strongly folded so that the so-called "blushing" takes place in the folded edge portions and in extreme cases pinholes may be formed. Accordingly, the intermediate layer 8 is provided inside the outer layer 7 to maintain flexibility of the inner tubular film 1 and at the same time to prevent the formation of pinholes which would permit intrusion of water vapour.

The inner layer 9 comprises a non-oriented film of a plastic which possesses poor water-permeability and resistance to heat to such a degree that the plastic is not melted or deteriorated by steam. Polypropylene is suitable as the plastic but should not be oriented. Polypropylene has poor water vapour transmission and a melting point of 130-140°C so that it withstands steam. Although polypropylene cannot withstand the heat (about 200°C) evolved during the curing of the sheet 2 the inner layer is positioned furthermost from the sheet 2 and is contacted by steam of a lower temperature. Accordingly, the polypropylene is not heated above its melting point and covers the inner surface of the tubular film 1 to prevent transmission of water vapour. In case the inner layer 9 is used under such condition that it may be exposed to higher temperatures, it is preferable to use a block copolymeric polypropylene having a high melting point. In general, non-oriented polypropylene has high tensile elasticity and contraction by heat but has poor tear resistance. Accordingly, the use of non-oriented polypropylene causes contraction by heat of heated steam and partial crack in the extreme case so that the intermediate layer and the outer layer can be contacted directly with heated steam. As this film is not oriented, however, there is no fear of contraction even by heating. Further, the film is extremely low in tensile elasticity but is high in tear resistance. Accordingly, the film is not cracked by heating and ensures inhibiting the transmission of steam.

This inner tubular film 1 is manufactured by integrally binding each plastic film of the outer layer 7, the intermediate layer 8 and the inner layer 9 by the aid of an isocyanate binder as dry laminate, forming the combined film into a tube, and heat-sealing the inner layer 9 at both edges. Alternatively, the inner tubular film 1 may be manufactured by bringing both edges of the integrally combined film into contact with each other and heat-sealing the film with a tape having the same structure as the inner tubular film 1, in such manner that the layer corresponding to the inner layer 9 of the tape is contacted with the inner layer 9 of the film 1.

In Fig. 5a showing a partial enlarged view of other example of the lining material, the FCM-sheet 2 is interposed, as in the example of Fig. 1, between the inner tubular film 1 made of a heat-resistant synthetic resin (and which may be the composite just described) and the outer film 3. In this example, however, a liquefiable film 9A, i.e. polystyrene film 9A is further interposed between the FCM-sheet 2 and the tubular film 1 and forming a third film in the assembly. This polystyrene film 9A can be provided around the film 1 by covering the tubular film 1 with a polystyrene tube or winding a polystyrene film spirally on the tubular film 1. These films 1 and 9A are then overlaid with the FCM-sheet 2 and the outer film 3 in the same manner as shown in Fig. 1.

The thermohardenable resin 6 contains monomeric styrene as a reactive solvent. The polystyrene film 9A is dissolved in this monomeric styrene and as a whole forms a viscous concentrated solution of polystyrene in monomeric styrene. This solution is kept between the inner tubular film 1 and the FCM-sheet 2. In this case, the fabric 4 and the mat 5 of fibres may be the same as described with respect to Fig. 1. The monomeric styrene participates in the reaction as a cross linking agent on the curing of the unsaturated polyester resin 6 and is entirely consumed once the curing of the unsaturated polyester resin 6 is finished.

Another example of a liquefiable film 9A is a film of ethylene-vinyl acetate copolymer (EVA). In this case, EVA film 9A is melted by the heat evolved by the curing of unsaturated polyester resin 6 in the FCM-sheet 2, and the molten EVA film 9A is again solidified, after completion of the curing reaction of the unsaturated polyester resin 6, by cooling to form an integrally combined fabric-fibre reinforced plastic lining.

In Figure 5b a further version of the lining material is seen. It is a problem with some pipes once lined that abrasive materials in the fluids conducted in the pipes may unduly wear down the lining. This is particularly true of storm-drain and sewage pipes, where grains of earth, sand or the like may be entrained in the liquids.

The material shown in Fig. 5b is for use in such circumstances. As well as the fabric 4 near the outer surface of the liner, the mat 5 of fibres and the tubular layer 1 (which may be composite) as before, a non-woven fabric 16, here a felt, is positioned at the inner face of the mat 5.

The non-woven fabric 16 of a thickness of e.g. 0.3 to 1.2 mm and is made of general synthetic or natural fibres such as Nylon or polyester, but not of high-strength fibres since the latter tend to be brittle and hence to abrade. A particular example is a nonwoven fabric of 100d polyester short fibres, having a weight of 130 g/m² and a thickness of 0.6 mm.

It is impregnated together with the mat 5 and fabric 4. When the lining is in situ and cured and the tube 1 has been removed (as will be described) at first there will be a layer of hardened resin exposed to the fluids in the pipe. Sooner or later that will abrade and the fibrous component of the non-woven fabric 16 will be exposed. This is comparatively soft and flexible, and absorbs shock; it is less abraded than brittle, hard fibres would be.

This Figure shows also how a polystyrene film 17 may be provided for the same purpose as film 9A, adjacent to the fabric 4. This may be alternative to or additional to the presence of a film 9A adjacent to layer 1 as seen in Figure 5a.

The process of this invention for providing pipe lines with a fabric-fibre-reinforced plastic lining will now be explained.

At the outset, the outer film 3 is removed by peeling it off from the lining material. The lining material is then inserted into a pipe preferably in such manner that at one end of the pipe the lining material is connected at one end to a draw belt previously passed through the pipe from an other end of the latter.

Fig. 6 is a plan view showing the lining material and the draw belt in this state. The draw belt 10 has an expanded portion 11 at its front end. The lining material 12 in flattened state is overlaid at one end over the enlarged end portion of the draw belt 10 and folded to enwrap that portion 11 as shown in Fig. 5. The lining material 12 is bound externally by a line 13. The lining material 12 can thus be connected to the draw belt 10 and the expanded portion ensures this connection. Accordingly, the drawing force of the belt 10 can be exerted evenly to the lining material 12.

When the lining material 12 in flattened state is drawn into the pipe 14 by the action of the draw belt 10, the lining material 12 is preferably depressed in its central part as it enters the pipe as to form a U-shape cross section as seen in Fig. 7.

The lining material with the edges of sheet 2 overlapped has an outer periphery slightly less than the inner periphery of the pipe 14. Accordingly, the lining material in flattened state has a width significantly larger than the inner diameter of the pipe 14. If the lining material is inserted in flattened state into the pipe line and pulled forward by the action of the draw belt, the outermost edges of the flattened lining material will be pressed hard against the inner surface of the pipe 14 so that they may be damaged by friction and abrasion. If the lining material is bent in the lateral direction so as to form a U-shape cross section, the friction between the moving lining material and the inner surface of the pipe is minimized and the lining material is pulled forward smoothly.

When the lining material has fully been inserted into the pipe 14, the ends of the lining material are allowed to extend beyond the ends of the pipe line. Both ends of the lining material are then sealed so that one end of the lining material is closed. A pressurized fluid is introduced into the lining material through the seal at the other end to inflate the lining material.

Fig. 8 is a partial cross sectional view showing the state of the lining material in the pipe line internally inflated at the initial stage, i.e. the state of the lining material ordinarily inflated by a pressurized fluid as described above. Compressed air or pressurized water may be used, but compressed air is preferable. In Fig. 8, a clearance 15 is formed between the pipe line 14 and the FCM-sheet 2. This is because the outer peripheral length of the inner tubular film 1 is originally so selected that it is somewhat shorter than the inner peripheral length of the pipe 14 which is to be lined.

By elevating the inner pressure in the lining material, which may be done in a distinct second stage of the pressurising process, the inner tubular film 1 is expanded and the FCM-sheet 2 is slidably moved at the overlapped portion in such manner that, the edges of the sheet 2 are moved in opposite directions as shown by the arrows in Fig. 7 to increase the peripheral length of the sheet 2.

When compressed air is used for inflating the lining material, its pressure is normally within the range from 0.3 to 1.0 kg/cm²G. In case the lining material is merely inflated, a pressure of about 0.3 - 0.5 kg/cm²G is necessary. On the other hand, a somewhat stronger pressure, e.g. 0.5 - 1 kg/cm²G is necessary for expanding the lining material to bring it into tightly contact with the inner surface of the pipe line.

Fig. 9 is a partial cross sectional view showing the state of the lining material at the final stage in the pipe line where the lining material is tightly and evenly contacted with the inner surface of the pipe line. The above 2-stage pressurizing treatment for realizing the state as shown in Figs. 7 and 8 can be carried out continuously. After the pressurizing treatment, it is then confirmed whether or not the lining material is tightly contacted over its full length with the inner surface of the pipe line. Next, the pressurized fluid is evacuated and then a fluid for heating the lining material internally is introduced into the pipe line. Usually, steam is used as this fluid. The steam pressure in this case is usually within the range of 0.3 - 1.0 kg/cm₂G and the heating is continued until the thermohardenable resin 6 in the FCM-sheet 2 is completely cured. In case the FCM-sheet 2 contains styrene or EVA, this substance is also cured integrally with the thermohardenable resin. The time necessary for curing the resin is generally within the range from 30 minutes to 2 hours, preferably one hour.

After completion of the curing, steam is replaced with compressed air to cool the lining material. By heating, the thermohardenable resin in the FCM-sheet is cured integrally with the fabric and the mat of highly strong fibres to form a fabric-fibre-reinforced plastic lining which is strongly bonded as a rigid pipe to the inner surface of the pipe line. Finally, the inner tubular film 1 is removed by peeling it off from the resultant fabric-fibre-reinforced plastic lining as a rigid pipe. In this case, the peeling of the tubular film 1 is preferably carried out by pulling a leader belt previously passed through the inside of the pipe line and connected to one end of the tubular film 1 while everting it.

According to the present invention, a number of advantages can be achieved by using the specific FCM-sheet and the specific pipe-lining process.

The FCM-sheet used comprising both a fabric and a mat of highly strong fibres impregnated with the thermohardenable resin is different in strength from SMC comprising only a mat of similar strong fibres impregnated with a thermohardenable resin. In case of SMC, the lining material may be locally stretched or broken in extreme cases. An FCM-sheet lining is so strong that it has a high tensile strength and is quite free of local elongation or break even at the time of being drawn into a pipe line. In addition, the FCM-sheet withstands local elongation and forms no wrinkles as the overlapped portions slide to increase the periphery of the FCM-sheet, i.e. the diameter of the liner. Thus, an adequate lining of the FCM-sheet under proper tension can be made over all the inner surface of the pipe. Although the overlapped portions of the FCM-sheet are tacky they are slidably movable in opposite directions under a relatively low inner pressure without causing any mutual fusion.

The FCM-sheet having a water-repellent fabric 4, it prevents external intrusion of moisture or water into the liquid thermohardenable resin so that the curing reaction of the FCM-sheet is not disturbed. As the water repellent fabric inhibits intrusion of external water even after the curing reaction, this can be prevented even if the structure of the FCM-sheet is not sufficiently dense. The lining treatment can be carried out even if the pipe line is wetted.

In case of the lining material having three layers in its inner tubular film, the following technical merits can be achieved. As a film of high strength is used for the outer layer and an intermediate layer exists inside of the outer layer, the inner tubular film has high mechanical strength and moderate flexibility and so is convenient in handling. Even if the so-called "blushing" phenomenon of the outer layer takes place in case of folding the lining material in flattened state, the existence of the intermediate layer possessing flexibility, toughness and high tensile stress at a low degree of elongation prevents the formation for pinholes. If a pipe to be treated has a branch, a troublesome problem occurs in the lining treatment. When steam is introduced into the lining material applied to the inner surface of the pipe, the inner tubular film is expanded under the steam pressure to allow the FCM-sheet to expand into the recess of the branched portion. In this embodiment, however, a film-of high strength is used as the outer layer and biaxially oriented films are used for both outer and intermediate layers of this tubular layer 1 so that the inner layer is not excessively expanded and the FCM-sheet is prevented from suffering any local reduction in thickness. When the lining material is heated with steam, the inner layer prevents permeation of steam while the outer layer withstands the heat (about 200°C) of the exothermic reaction during the curing of the thermohardenable resin. The inner layer is not so high in heat-resistance but is not excessively heated as it is contacted with steam. After completion of the curing reaction, the inner tubular film may be removed by peeling it off from the resultant fabric-fibre-resistance plastic lining while everting the film by drawing it with a draw-belt. The heavy load in this case is undertaken by the film of the outer layer which has been biaxially oriented and has strong tensile strength. Further, the outer layer has high heat-resistance and is not molten at the time of curing the thermohardenable resin so that the inner tubular film having the outer layer in contact with the resultant fabric-fibre-reinforced plastic lining can easily be peeled off therefrom. Accordingly, the lining of a pipe line with the fabric-fibre-reinforced plastic lining can be attained without any trouble by the use of the inner tubular film having such three layers.

In case of the lining material as shown in Fig. 5a the liquefiable film is dissolved in a polymerizable solvent but is solidified to form an integral plastic lining with the FCM-sheet. If the internal pressure at the time of curing the FCM-sheet is insufficient, a dense fabric-fibre-reinforced plastic lining cannot be obtained and a number of interstices are formed in the fabric and/or mat structure. Even if that is the case, the liquefied resin occupies the interstices and solidified integrally with the cured resin in the sheet. Thus, the bonding strength of the fabric-fibre-reinforced plastic lining to the inner surface of the pipe line is significantly enhanced.

To demonstrate the effectiveness of the embodiment seen in Fig 5b, the sheet was as a whole formed into a tubular composite to obtain a lining material for a 200 mm-caliber Hume pipe.

Next, the lining material thus formed was applied onto the inner surface of a 200 mm-caliber Hume pipe. Precisely, the outer film 3 was first peeled off from the surface of the lining material, and the resulting lining material was then inserted into the inside of the Hume pipe therethrough, and the lining expanded and cured as previously described.

As a comparative example, a sheet was formed from only the mat (5) without the non-woven fabric (16), and a comparative lining material was formed from the sheet in the same way as above. This was applied to a Hume pipe also in the same way as above.

Water containing 5% by weight of #2 siliceous sand was introduced into each of the thus lined Hume tubes at a flow rate of 10 m/min for one month.

The abraded condition was visually evaluated with the naked eye in the both cases. As a result, in the comparative sample not having the non-woven fabric (16), the lining material noticeably wore away and the thickness thereof decreased. As opposed to this, in the sample of the present invention having the nonwoven fabric (16), the thickness of the lining material did not decrease though the surface of the lining material was somewhat scratched because of the contact with the sand.

Next, a 3 cm x 3 cm test piece was cut out from each of the lining material of the present invention and the comparative lining material, and the both test pieces were hardened by heat pressure. Each of the thus hardened pieces was attached to the inner surface of the lower part of a 20-litre polyethylene bucket.

A water containing 5% by weight of #2 siliceous sand was put in the bucket and a stirrer was set in the centre thereof. Then, the stirrer was rotated under the condition that the flow rate at the position with the test piece could be about 10 m/min.

After one month, rotation of the stirrer was stopped and the test piece was taken out from the bucket. Then, the abraded depth of the surface was measured for each test piece and the value was converted into the abraded amount per year to be 0.7 mm/year for the sample of the invention while it was 3.4 mm/year for the comparative sample.

It is considered that rain would flow into sewage pipes in addition to sewage and therefore the lining material of the pipes would be abraded and worn away by the grains of earth and sand in the rain. Under the consideration, the test condition of the above-mentioned test was set on the presumption that a large amount of rain flowed into sewage pipes because of a heavy rainfall. Although the condition is an extremely severe one as a condition of using sewage pipes, it must be always taken into consideration for actually using sewage pipes in view of the probability of having several heavy rainfall days a year.

Even when the pipes lined with the lining material having a thin non-woven fabric, such as 16, continuously used under the above-mentioned severe condition for a long period of one year or so, they are sufficiently durable. In view of the fact, it is considered that the present lining material would hardly be abraded under the condition of the actual use and the thickness of the lining material would not almost decrease even though it is actually used for a period of several tens of years.

In the liquid thermohardenable resin contained in the FCM-sheet, a thermoplastic polymer as a low shrinkage additive is dispersed in the form of fine particles. When a rapid exothermic reaction takes place on the curing of the thermohardenable resin, the thermoplastic polymer particles undergo rapid thermal expansion by the heat to compensate shrinkage of the thermohardenable resin accompanied by the curing reaction. When the curing of the thermohardenable resin is finished, the exotherm ceases and the temperature falls whereby the thermoplastic polymer particles contract. At that time, however, the thermohardenable resin has been cured and forms three dimensional linkages so that it can no longer be shrinked. Accordingly, the thermoplastic polymer alone contracts forming voids and thus a lining free of contraction as a whole can be formed. Accordingly, the lining material does not contract on curing and is firmly bonded to the inner surface of the pipe.

As the filler, the use of an acid-resistant substance such as barium sulfate, talc, glass powder and the like is effective for making the lining material anticorrosive. Aluminium hydroxide magnesium hydroxide and the like are themselves weak in acid-resistance but can preferably be used.

## Claims

1. Material for lining a pipe which has a flexible tubular film (1), a sheet (2) which is around the tubular film (1) and comprises a mat (5) of chopped strand glass fibres impregnated with a thickened thermohardenable resin as a sheet moulding compound and being dispersed therein; and a glass cloth fabric (4) adjacent the outer face of the sheet (2) remote from the film (1), lateral edge portions (2a,2b) of the sheet slidably overlapping each other, and a removable cover layer (3) covering the outer surface of the sheet (2).

2. A lining material according to claim 1 wherein the sheet (2) additionally includes a non-woven fabric (16) adjacent an inner face of the sheet (2) adjacent the film (1).

3. A lining material according to claim 2 wherein the non-woven fabric (16) adjacent the inner face of the sheet (2) is composed of flexible fibres.

4. A lining material according to claim 1, claim 2 or claim 3 wherein the fabric (4) adjacent the outer face of the sheet (2) is water-repellant.

5. A lining material according to any one of the preceding claims wherein the tubular film (1) has an outer layer (7) which is a heat-resistant film of biaxially-oriented plastics material of high tensile strength, a middle layer (8) which is a film of biaxially-oriented plastics material of high flexibility and an inner layer (9) which is a film of non-oriented plastics material having low permeability to water vapour.

6. A lining material according to any one of the preceding claims wherein a further film (9A,17) is positioned adjacent the mat, the further film (9A,17) being liquefiable and being of a material which is integrated with the sheet upon curing of the thermohardenable resin.

7. A lining material according to claim 6 wherein the further film (9A) is also adjacent the tubular film (1).

8. A lining material according to claim 6 wherein the further film (17) is also adjacent the fabric (4).

9. A lining material according to any one of the preceding claims wherein fabric extensions (19) beyond the overlapping ends of the sheet (2) are secured together to form a tube of fabric around the sheet.

10. A lining material according to claim 9 wherein said extensions are extensions of the fabric (4) of the sheet.

11. A process for providing a pipe (14) with a fiber-reinforced plastic lining which comprises peeling off the cover layer (3) of an uncured lining material according to any of the preceding claims, inserting the lining material into the pipe (14) with the fabric layer (4) outermost and contactable with the pipe (14), closing both ends of the lining material, inflating the lining material by introducing a fluid under pressure whereby the laterally overlapped portions (2a,2b) of the mat may slide over each other so as to allow even contact of the material with the inner surface of the pipe lines, thereafter heating the lining material to cure the thickened thermohardenable resin in the material to form an integrally combined fiber-reinforced plastic lining on the inner surface of the pipe (14), and peeling off the flexible tubular film (1).

12. A process according to claim 11 wherein the flexible tubular film (1) is peeled off by drawing a draw-belt (10) previously attached to one end of the lining material in the direction of the other end to evert the flexible tubular film (1).

13. A process according to claim 11 or claim 12 wherein the tube of lining material in flattened state is bent in the lateral direction so as to show a U-cross section to be pulled into the pipe (14).

14. A process according to any one of claims 11 to 13 wherein the lining material inserted into the pipe (14) extends from both ends thereof and sealed in such manner that one end of the lining material is closed, and the fluid is then introduced into the lining material through a sealing tool on the other end of the lining material to inflate it.

15. A process according to any one of claims 11 to 14 wherein the fluid under pressure is introduced in two stages, a first of which being to inflate the lining material into first contact with the pipe (14) and a second higher pressure stage of which is to cause any said sliding of the overlapped portions.

16. A process according to any one of claims 11 to 15 wherein the pressuring fluid under pressure is replaced with a heating fluid to heat the lining material internally while it is in contact with the inner surface of the pipe (14).

## Patentansprüche

1. Material zur Auskleidung eines Rohres, umfassend einen flexiblen schlauchförmigen Film (1), eine Lage (2), die um den schlauchförmigen Film (1) herum angeordnet ist und eine Matte (5) aus gehackten Glasseidensträngen, die mit einem eingedickten wärmehärtbaren Harz als Sheet Moulding Compound imprägniert und darin dispergiert sind; sowie ein an der vom Film (1) abgewandten Außenfläche der Lage (2) anliegendes Glasfasergewebe (4) umfaßt, wobei seitliche Randabschnitte (2a, 2b) der Lage einander gleitend überlappen und eine abnehmbare Deckschicht (3) die Außenfläche der Lage (2) bedeckt.

2. Auskleidungsmaterial nach Anspruch 1, worin die Lage (2) zusätzlich ein Faservlies (16) umfaßt, das an der am Film (1) anliegenden Innenfläche der Lage (2) anliegt.

3. Auskleidungsmaterial nach Anspruch 2, worin das an der Inennfläche der Lage (2) anliegende Faservlies (16) aus flexiblen Fasern besteht.

4. Auskleidungsmaterial nach Anspruch 1, 2 oder 3, worin das an der Außenfläche der Lage (2) anliegende Gewebe (4) wasserabstoßend ist.

5. Auskleidungsmaterial nach einem der vorangegangenen Ansprüche, worin der schlauchförmige Film (1) eine Außenschicht (7), die ein hitzebeständiger Film aus biaxial gerecktem Kunststoffmaterial mit hoher Zugfestigkeit ist, eine mittlere Schicht (8), die ein Film aus biaxial gerecktem Kunststoffmaterial mit hoher Flexibilität ist, und eine Innenschicht (9), die ein Film aus nicht gerecktem Kunststoffmaterial mit geringer Durchlässigkeit für Wasserdampf ist, aufweist.

6. Auskleidungsmaterial nach einem der vorangegangenen Ansprüche, worin ein weiterer Film (9A, 17) an die Matte anliegend vorgesehen ist, wobei der weitere Film (9A, 17) verflüssigbar ist und aus einem Material besteht, das beim Härten des wärmehärtbaren Harzes einstückig mit der Lage verbunden wird.

7. Auskleidungsmaterial nach Anspruch 6, worin der weitere Film (9A) auch am schlauchförmigen Film (1) anliegt.

8. Auskleidungsmaterial nach Anspruch 6, worin der weitere Film (17) auch am Gewebe (4) anliegt.

9. Auskleidungsmaterial nach einem der vorangegangenen Ansprüche, worin Gewebefortsätze (19) über die überlappenden Enden der Lage (2) hinaus miteinander verbunden sind, um einen Gewebeschlauch um die Lage herum zu bilden.

10. Auskleidungsmaterial nach Anspruch 9, worin die Fortsätze Fortsätze des Gewebes (4) der Lage sind.

11. Verfahren, um ein Rohr (14) mit einer faserverstärkten Kunststoff-Auskleidung zu versehen, umfassend das Abziehen der Deckschicht (3) eines ungehärteten Auskleidungsmaterials nach einem der vorangegangenen Ansprüche, das Einschieben des Auskleidungsmaterials in das Rohr (14), wobei sich die Gewebeschicht (4) ganz außen befindet und mit dem Rohr (14) in Kontakt gebracht werden kann, das Schließen beider Enden des Auskleidungsmaterials, das Aufblasen des Auskleidungsmaterials durch Einleiten eines Fluids unter Druck, wodurch die seitlich überlappenden Abschnitte (2a, 2b) der Matte übereinander gleiten können, so daß gleichmäßiger Kontakt des Materials mit der Innenfläche der Rohrleitungen ermöglicht wird, das anschließende Erwärmen des Auskleidungsmaterials, um eingedicktes wärmehärtbares Harz im Material zu härten, um an der Innenfläche des Rohres (14) eine einstückig kombinierte faserverstärkte Kunststoff-Auskleidung zu bilden, und das Abziehen des flexiblen schlauchförmigen Films (1).

12. Verfahren nach Anspruch 11, worin der flexbile schlauchförmige Film (1) abgezogen wird, indem ein zuvor an einem Ende des Auskleidungsmaterials befestigter Zuggurt (10) in Richtung des anderen Endes gezogen wird, um den flexiblen schlauchförmigen Film (1) umzustülpen.

13. Verfahren nach Anspruch 11 oder 12, worin der Schlauch aus Auskleidungsmaterial in flachgedrücktem Zustand in seitlicher Richtung gebogen wird, damit er einen U-förmigen Querschnitt zum Einziehen in das Rohr (14) aufweist.

14. Verfahren nach einem der Ansprüche 11 bis 13, worin sich das in das Rohr (14) eingeschobene Auskleidungsmaterial an beiden Enden davon herausragt und auf solche Weise verschlossen wird, daß ein Ende des Auskleidungsmaterials geschlossen wird und das Fluid dann durch eine Dichtungseinrichtung am anderen Ende des Auskleidungsmaterials in das Auskleidungsmaterial eingeleitet wird, um es aufzublasen.

15. Verfahren nach einem der Ansprüche 11 bis 14, worin das Fluid unter Druck in zwei Stufen eingeleitet wird, von denen die erste dazu dient, das Auskleidungsmaterial durch Aufblasen in ersten Kontakt mit dem Rohr (14) zu bringen, und eine zweite Stufe bei höherem Druck dazu dient, jegliches Gleiten der überlappenden Abschnitte zu bewirken.

16. Verfahren nach einem der Ansprüche 11 bis 15, worin das unter Druck stehende Druckausübungs-Fluid durch ein Heizfluid ersetzt wird, um das Auskleidungsmaterial von Innen her zu erwärmen, während es mit der Innenfläche des Rohres (14) in Kontakt steht.

## Revendications

1. Matériau pour le revêtement d'un tuyau qui a un film tubulaire flexible (1), une feuille (2) qui est autour du film tubulaire (1) et qui comprend un tapis (5) de fibres hachées de verre en brins imprégnées d'une résine thermodurcissable épaissie comme composé de moulage en feuille et qui y sont dispersées, et une étoffe en tisu de verre (4) adjacente à la face externe de la feuille (2) éloignée du film (1), des portions des bords latéraux (2a, 2b) de la feuille se recouvrant de façon coulissante et un couche amovible de recouvrement (3) couvrant la surface externe de la feuille (2).

2. Matériau de revêtement selon la revendicaiton 1 où la feuille (2) comporte additionnellement une étoffe non tissée (16) adjacente à une face interne de la feuille (2) adjacente au film (1).

3. Matériau de revêtement selon la revendication 2 où l'étoffe non tissée (16) adjacente à la face interne de la feuille (2) se compose de fibres flexibles.

4. Matériau de revêtement selon la revendication 1, la revendication 2 ou la revendication 3 où l'étoffe (4) adjacente à la face externe de la feuille (2) est hydrofuge.

5. Matériau de revêtement selon l'une quelconque des revendications précédentes où le film tubulaire (1) a une couche externe (7) qui est un film thermorésistant d'une matière plastique biaxialement orientée de forte résistance à la traction, une couche moyenne (8) qui est un film d'une matière plastique biaxialement orientée de haute flexibilité et une couche interne (9) qui est un film de matière plastique non orientée ayant une faible perméabilité vis-à-vis de la vapeur d'eau.

6. Matériau de revêtement selon l'une quelconque des revendications précédentes où un autre film (9A, 17) est placé adjacent au tapis, l'autre film (9A, 17) étant liquéfiable et étant en un matériau qui est intégré à la feuille lors du durcissement de la résine thermodurcissable.

7. Matériau de revêtement selon la revendication 6 où l'autre film (9A) est également adjacent au film tubulaire (1).

8. Matériau de revêtement selon la revendication 6 où l'autre film (17) est également adjacent à l'étoffe (4).

9. Matériau de revêtement selon l'une quelconque des revendications précédentes où des extensions (19) de l'étoffe au-delà des extrémités se recouvrant de la feuille (2) sont fixées ensemble pour former un tube d'étoffe autour de la feuille.

10. Matériau de revêtement selon la revendication 9 où lesdites extensions sont des extensions de l'étoffe (4) de la feuille.

11. Procédé pour produire un tuyau (14) avec un revêtement plastique renforcé de fibres qui consiste à écailler la couche de recouvrement (3) d'un matériau de revêtement non durci selon l'une quelconque des revendications précédentes, à insérer le matériau de revêtement dans le tuyau (14) avec la couche d'étoffe (4) vers l'extérieur et pouvant contacter le tuyau (14), à fermer les deux extrémités du matériau de revêtement, à gonfler le matériau de revêtement par introduction d'un fluide sous pression pour qu'ainsi les portions se recouvrant latéralement (2a, 2b) du tapis puissent glisser l'une sur l'autre afin de permettre un contact régulier du matériau avec la surface interne des pipelines, et ensuite à chauffer le matériau de revêtement pour durcir la résine thermodurcissable épaissie dans le matériau pour former un revêtement plastique renforcé de fibres intégralement combiné sur la surface interne du tuyau (14) et à écailler le film tubulaire flexible (1).

12. Procédé selon la revendication 11 où le film tubulaire flexible (1) est écaillé en tirant une bande (10) précédemment attachée à une extrémité du matériau de revêtement dans la direction de l'autre extrémité pour retourner le film tubulaire flexible (1).

13. Procédé selon la revendication 11 ou la revendication 12 où le tube du matériau de revêtement à l'état aplati est courbé en direction latérale afin de montrer une section transversale en U pour être tiré dans le tuyau (14).

14. Procédé selon l'une quelconque des revendications 11 à 13 où le matériau de revêtement inséré dans le tuyau (14) s'étend à partir de ses deux extrémités et est scellé de manière qu'une extrémité du matériau de revêtement soit fermée et le fluide est alors introduit dans le matériau de revêtement par un outil de scellement à l'autre extrémité du matériau de revêtement pour le gonfler.

15. Procédé selon l'une quelconque des revendications 11 à 14 où le fluide sous pression est introduit en deux stades, dont un premier consiste à gonfler le matériau de revêtement en premier contact avec le tuyau (14) et un second stade à plus haute pression est pour provoquer un glissement des portions se recouvrant.

16. Procédé selon l'une quelconque des revendications 11 à 15, où le fluide pressurisant sous pression est remplacé par un fluide chauffant pour chauffer ultérieurement le matériau de revêtement alors qu'il est en contact avec la surface interne du tuyau (14).
